(19) Europäisches Patentamt
European Patent Office
Office européen des brevets

(11) EP 4 293 779 A1

(12) EUROPEAN PATENT APPLICATION
published in accordance with Art. 153(4) EPC

(43) Date of publication:
**20.12.2023 Bulletin 2023/51**

(21) Application number: **21933068.5**

(22) Date of filing: **25.03.2021**

(51) International Patent Classification (IPC):
***H01M 10/0565*** *(2010.01)*

(52) Cooperative Patent Classification (CPC):
**H01M 10/0565;** Y02E 60/10; Y02P 70/50

(86) International application number:
**PCT/JP2021/012675**

(87) International publication number:
**WO 2022/201463 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **LG Energy Solution, Ltd.**
**Seoul 07335 (KR)**

(72) Inventors:
- **KURODA Naoto**
  **Tokyo 100-6606 (JP)**
- **MIKUNI Hiroki**
  **Tokyo 100-6606 (JP)**

(74) Representative: **Hoffmann Eitle**
**Patent- und Rechtsanwälte PartmbB**
**Arabellastraße 30**
**81925 München (DE)**

# (54) LITHIUM ION SECONDARY BATTERY, SEPARATION MEMBRANE, AND MANUFACTURING METHODS THEREFOR

(57) One aspect of the present invention provides a lithium ion secondary battery comprising a positive electrode mixture layer, a separation membrane, and a negative electrode mixture layer in the stated order, wherein: the positive electrode mixture layer contains a positive electrode active material, a first lithium salt, and a first solvent, the negative electrode mixture layer contains a negative electrode active material, a second lithium salt, and a second solvent different from the first solvent, the separation membrane contains a polymer having lithium ion conductivity, a third lithium salt, and a third solvent, and the polymer is a copolymer comprising, as monomer units thereof, a first monomer that has two (meth)acryloyl groups and a second monomer that has three or more (meth)acryloyl groups.

EP 4 293 779 A1

## Description

### [TECHNICAL FIELD]

The present invention relates to a lithium ion secondary battery, a separation membrane, and a manufacturing method therefor.

### [BACKGROUND]

In recent years, with the spread of portable electronic devices, electric vehicles, and the like, secondary batteries typified by lithium ion secondary batteries are required to further improve the performance. For example, technology for improving the performance of lithium ion secondary batteries by containing different types of electrolytes in the positive electrode and the negative electrode is under study (e.g., Patent Literature 1).

[Prior Art Literature]

[Patent Literature]

Patent Literature 1: Japanese Unexamined Patent Publication No. 2001-110447

### [DETAILED DESCRIPTION OF THE INVENTION]

### [Technical Problem]

In a lithium ion secondary battery in which different types of electrolytes are contained in the positive electrode and the negative electrode, it is important that the solvent contained in the electrolyte is sufficiently separated without mixing between the positive electrode and the negative electrode. The present inventors considered disposing a separation membrane between the positive electrode and the negative electrode in order to separate the solvent in the electrolyte in such a lithium ion secondary battery. When using a separation membrane, it is preferable that the resistance value is low in spite of being a thin film.
It is an object of the present invention to provide a separation membrane having a thin film thickness and a low resistance value, which is used in a lithium ion secondary battery in which a positive electrode mixture layer and a negative electrode mixture layer contain different solvents from each other, and a lithium ion secondary battery comprising such a separation membrane, and a manufacturing method therefor.

### [Technical Solution]

According to one aspect of the present invention, there is provided a lithium ion secondary battery comprising a positive electrode mixture layer, a separation membrane, and a negative electrode mixture layer in the stated order, wherein: the positive electrode mixture layer contains a positive electrode active material, a first lithium salt, and a first solvent, the negative electrode mixture layer contains a negative electrode active material, a second lithium salt, and a second solvent different from the first solvent, the separation membrane contains a polymer having lithium ion conductivity, a third lithium salt, and a third solvent, and the polymer is a copolymer comprising, as monomer units thereof, a first monomer that has two (meth)acryloyl groups and a second monomer that has three or more (meth)acryloyl groups.
According to another aspect of the present invention, there is provided a separation membrane for being disposed between a positive electrode mixture layer and a negative electrode mixture layer, in a lithium ion secondary battery comprising a positive electrode mixture layer that contains a positive electrode active material, a first lithium salt and a first solvent, and a negative electrode mixture layer that contains a negative electrode active material, a second lithium salt and a second solvent different from the first solvent, wherein the separation membrane contains a polymer having lithium ion conductivity, a third lithium salt, and a third solvent, and wherein the polymer is a copolymer comprising, as monomer units thereof, a first monomer that has two (meth)acryloyl groups and a second monomer that has three or more (meth)acryloyl groups.
According to another aspect of the present invention, there is provided a method for manufacturing a lithium ion secondary battery, comprising: obtaining a positive electrode comprising a positive electrode mixture layer that contains a positive electrode active material, a first lithium salt, and a first solvent; obtaining a negative electrode comprising a negative electrode mixture layer that contains a negative electrode active material, a second lithium salt, and a second solvent different from the first solvent; forming a slurry containing a first monomer having two (meth)acryloyl groups, a second monomer having three or more (meth)acryloyl groups, a third lithium salt and a third solvent into a

membrane, and then reacting the first monomer and the second monomer to obtain a separation membrane; and providing the separation membrane between the positive electrode and the negative electrode.

According to yet another aspect of the present invention, there is provided a method for manufacturing a separation membrane for being disposed between a positive electrode mixture layer and a negative electrode mixture layer, in a lithium ion secondary battery comprising a positive electrode mixture layer that contains a positive electrode active material, a first lithium salt and a first solvent, and a negative electrode mixture layer that contains a negative electrode active material, a second lithium salt and a second solvent different from the first solvent, wherein the method comprises forming a slurry containing a first monomer having two (meth)acryloyl groups, a second monomer having three or more (meth)acryloyl groups, a third lithium salt and a third solvent into a membrane, and then reacting the first monomer and the second monomer to obtain a separation membrane.

In each aspect, the second monomer may be a monomer having four (meth)acryloyl groups.

## [Advantageous Effects]

According to one aspect of the present invention, a separation membrane having a thin film thickness and a low resistance value, which is used in a lithium ion secondary battery in which a positive electrode mixture layer and a negative electrode mixture layer contain different solvents, and a lithium ion secondary battery comprising the separation membrane, and a manufacturing method therefor can be provided.

## [BRIEF DESCRIPTION OF THE DRAWINGS]

FIG. 1 is a perspective view showing a lithium ion secondary battery according to one embodiment; and
FIG. 2 is an exploded perspective view showing one embodiment of an electrode group in the Lithium ion secondary battery shown in FIG. 1.

## [DETAILED DESCRIPTION OF THE EMBODIMENTS]

Hereinafter, one embodiment of the present invention is described while appropriately referring to the accompanying drawings. However, the present invention is not limited to the following embodiments. In the following embodiments, moreover, it is needless to say that the constituent elements (including process steps, etc.) are not necessarily essential unless explicitly specified to be so or apparently essential in principle. This will apply also to numerical values and ranges, which should not be construed as unduly limiting the present invention.

In the specification, the "step" includes an independent step. Further, if a step cannot be clearly distinguished from other steps, the step is included in the "step" as long as the step attains its prescribed effects. The numerical range indicated by using "to" means a range including numerical values indicated before and after the "to" as a minimum value and a maximum value, respectively.

Further, as for the content of each component in the composition in the specification, when plural substances corresponding to these components are present in the composition, unless otherwise indicated, the content means the total amount of these plural substances in the composition.

FIG. 1 is a perspective view showing a lithium ion secondary battery according to one embodiment. As shown in FIG. 1, a lithium ion secondary battery 1 according to one embodiment is a so-called laminated type secondary battery that comprises an electrode group 2 and a bag-type battery outer packaging body 3 that houses the electrode group 2. The electrode group 2 is provided with a positive electrode current collector tab 4 and a negative electrode current collector tab 5. The positive electrode current collector 4 and the negative electrode current collector tab 5 each protrude from the inside of the battery outer packaging body 3 to the outside, so that the positive electrode current collector and the negative electrode current collector (details will be described later) can be electrically connected to the outside of the lithium ion secondary battery 1. In another embodiment, the lithium ion secondary battery 1 may have a shape (coin type, cylindrical type, etc.) other than a laminated shape.

The battery outer packaging body 3 may be a container formed of, for example, a laminated film. The laminated film may be, for example, a laminated film in which a polymer film such as a polyethylene terephthalate (PET) film, a metal foil such as aluminum, copper, or stainless steel, and a sealant layer such as polypropylene are laminated in the stated order.

FIG. 2 is an exploded perspective view showing one embodiment of an electrode group 2 in the lithium ion secondary battery 1 shown in FIG. 1. As shown in FIG. 2, the electrode group 2 according to the present embodiment includes a positive electrode 6, a separation membrane 7, and a negative electrode 8 in the stated order. The positive electrode 6 includes a positive electrode current collector 9 and a positive electrode mixture layer 10 provided on the

positive electrode current collector 9. A positive current collector tab 4 is provided on the positive electrode current collector 9. The negative electrode 8 includes a negative electrode current collector 11 and a negative electrode mixture layer 12 provided on the negative electrode current collector 11. A negative electrode collector tab 5 is provided on the negative electrode current collector 11.

The positive electrode current collector 9 is made of, for example, aluminum, titanium, stainless steel, nickel, calcined carbon, conductive polymer, conductive glass, or the like. The thickness of the positive electrode current collector 9 may be, for example, 1 μm or more and 50 μm or less.

The negative electrode current collector 11 is formed of, for example, copper, stainless steel, nickel, aluminum, titanium, calcined carbon, conductive polymer, conductive glass, aluminum-cadmium alloy, or the like. The thickness of the negative electrode current collector 11 may be, for example, 1 μm or more and 50 μm or less.

In one embodiment, the positive electrode mixture layer 10 contains a positive electrode active material, a lithium salt (first lithium salt), and a solvent (first solvent).

The positive electrode active material may be, for example, lithium oxide. Examples of the lithium oxide include $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$ and $Li_xMn_{2-y}M_yO_4$ (in each formula, M represents at least one element selected from the group consisting of Na, Mg, Sc, Y, Mn, Fe, Co, Cu, Zn, Al, Cr, Pb, Sb, V and B (provided that M is an element different from other elements in each formula), x=0~1.2, y=0~0.9, z=2.0~2.3). The lithium oxide represented by $Li_xNi_{1-y}M_yO_z$ may be $Li_xNi_{1-(y1+y2)}Co_{y1}Mn_{y2}O_z$ (provided that x and z are the same as those described above, y1=0—0.9, y2=0~0.9, and y1+y2=0~0.9), and may be, for example, $LiNi_{1/3}Co_{1/3}Mn_{1/3}O_2$, $LiNi_{0.5}Co_{0.2}Mn_{0.3}O_2$, $LiNi_{0.6}Co_{0.2}Mn_{0.2}O_2$, $LiNi_{0.8}Co_{0.1}Mn_{0.1}O_2$. The lithium oxide represented by $Li_xNi_{1-y}M_yO_z$ may be $Li_xNi_{1-(y3+y4)}Co_{y3}Al_{y4}O_z$(provided that x and z are the same as those described above, y3=0~0.9, y4=0~0.9, and y3+y4=0~0.9), and may be, for example, $LiNi_{0.8}Co_{0.15}Al_{0.05}O_2$.

The positive electrode active material may be lithium phosphate. Examples of the lithium phosphate include lithium manganese phosphate ($LiMnPO_4$), lithium iron phosphate ($LiFePO_4$), lithium cobalt phosphate ($LiCoPO_4$), and lithium vanadium phosphate ($Li_3V_2(PO_4)_3$).

The content of the positive electrode active material may be 70% by mass or more, 80% by mass or more, or 85% by mass or more based on the total amount of the positive electrode mixture layer. The content of the positive electrode active material may be 95% by mass or less, 92% by mass or less, or 90% by mass or less based on the total amount of the positive electrode mixture layer.

The first lithium salt may be, for example, at least one selected from the group consisting of $LiPF_6$, $LiBF_4$, $LiClO_4$, $LiB(C_6H_5)_4$, LiCHsSOs, $CF_3SO_2OLi$, $LiN(SO_2F)_2$ (LiFSI, lithium bisfluorosulfonylimide), $LiN(SO_2CF_3)_2$ (LiTFSI, lithium bistrifluoromethanesulfonylimide), and $LiN(SO_2CF_2CF_3)_2$.

The content of the first lithium salt may be 0.5 mol/L or more, 0.7 mol/L or more, or 0.8 mol/L or more, and 1.5 mol/L or less, 1.3 mol/L or less, or 1.2 mol/L or less based on the total amount of the first solvent.

The first solvent is a solvent for dissolving the first lithium salt. Examples of the first solvent include a cyclic carbonate such as ethylene carbonate, propylene carbonate, vinylene carbonate, vinyl ethylene carbonate, fluoroethylene carbonate, and difluoroethylene carbonate, a chained carbonate such as dimethyl carbonate, diethyl carbonate, and ethyl methyl carbonate, a cyclic ester such as γ-butyrolactone, γ-valerolactone, δ-valerolactone, ε-caprolactone, and γ-hexanolactone, an ether such as tetrahydrofuran, 1,3-dioxane, dimethoxyethane, diethoxyethane, methoxyethoxyethane, glyme, diglyme, triglyme and tetraglyme, a phosphoric acid ester such as a chain sulfone such as dimethyl sulfone and diethyl sulfone, a cyclic sulfone such as sulfolane, a cyclic sulfonic acid ester such as propanesultone, and the like. The first solvent can be used singly or in combination of two or more types.

The solvent preferably used as the first solvent is a solvent having excellent oxidation resistance, such as acetonitrile and ethylene carbonate. Thereby, it is possible to increase the oxidation resistance of the positive electrode mixture layer 10.

The content of the first solvent contained in the positive electrode mixture layer 10 can be appropriately set within a range in which the first lithium salt can be dissolved, but for example, it may be 10% by mass or more and 80% by mass or less based on the total amount of the positive electrode mixture layer.

The positive electrode mixture layer 10 may further contain a binder and a conductive material as other components.

The binder may be a polymer containing, as a monomer unit thereof, at least one selected from the group consisting of tetrafluoroethylene, vinylidene fluoride, hexafluoropropylene, acrylic acid, maleic acid, ethyl methacrylate, methyl methacrylate, and acrylonitrile, rubber such as styrene-butadiene rubber, isoprene rubber, acrylic rubber, and like. The binder is preferably polyvinylidene fluoride or a copolymer containing hexafluoropropylene and vinylidene fluoride as the monomer unit.

The content of the binder may be 0.3% by mass or more, 0.5% by mass or more, 1% by mass or more, or 1.5% by mass or more, and 10% by mass or less, 8% by mass or less, 6% by mass or less, or 4% by mass or less, based on the total amount of the positive electrode mixture layer.

The conductive material may be a carbon material such as carbon black, acetylene black, graphite, carbon

fiber, or carbon nanotube, and the like. These conductive materials are used singly or in combination of two or more types.

The content of the conductive material may be 0.1% by mass or more, 1% by mass or more, or 3% by mass or more based on the total amount of the positive electrode mixture layer. The content of the conductive material is preferably 15% by mass or less, more preferably 10% by mass or less, and still more preferably 8% by mass or less based on the total amount of the positive electrode mixture layer, from the viewpoint of suppressing the increase in the volume of the positive electrode 6 and the decrease in the energy density of the lithium ion secondary battery 1 associated therewith.

The thickness of the positive electrode mixture layer 10 may be 5 μm or more, 10 μm or more, 15 μm or more, or 20 μm or more, and 100 μm or less, 80 μm or less, 70 μm or less, or 50 μm or less.

In one embodiment, the negative electrode mixture layer 12 contains a negative electrode active material, a lithium salt (second lithium salt), and a solvent (second solvent).

As the negative electrode active material, those commonly used in the field of energy devices can be used. Specific examples of the negative electrode active materials include metal lithium, lithium titanate ($Li_4Ti_5O_{12}$), lithium alloy or other metal compounds, carbon materials, metal complexes, organic polymer compounds, and the like. These negative electrode active materials are used singly or in combination of two or more types. Examples of the carbon material may include graphite such as natural graphite (flaky graphite, etc.), and artificial graphite, amorphous carbon, carbon fiber, and carbon black such as acetylene black, ketjen black, channel black, furnace black, lamp black, thermal black, and the like. The negative electrode active material may be a negative electrode active material containing silicon as a constituent element, a negative electrode active material containing tin as a constituent element, or the like, from the viewpoint of obtaining a larger theoretical capacity (e.g., 500 to 1500 Ah/kg). Among them, the negative electrode active material may be a negative electrode active material containing silicon as a constituent element.

The negative electrode active material containing silicon as a constituent element may be an alloy containing silicon as a constituent element, and an example thereof may be an alloy containing silicon and at least one selected from the group consisting of nickel, copper, iron, cobalt, manganese, zinc, indium, silver, titanium, germanium, bismuth, antimony and chromium as a constituent element. The negative electrode active material containing silicon as a constituent element may be an oxide, a nitride, or a carbide, and a specific example thereof may be a silicon oxide such as SiO, $SiO_2$, and LiSiO, a silicon nitride such as $Si_3N_4$ and $Si_2N_2O$, a silicon carbide such as SiC, or the like.

The content of the negative electrode active material may be 60% by mass or more, 65% by mass or more, or 70% by mass or more based on the total amount of the negative electrode mixture layer. The content of the negative electrode active material may be 99% by mass or less, 95% by mass or less, or 90% by mass or less based on the total amount of the negative electrode mixture layer.

The type and content of the second lithium salt can be used if they are identical to those of the first lithium salt contained in the above-mentioned positive electrode mixture layer 10. The second lithium salt may be the same as or different from the first lithium salt.

The second solvent is a solvent for dissolving the second lithium salt. As the second solvent, the solvent identical to that used as the first solvent can be used, but a solvent different from the first solvent may be used. Thereby, since suitable solvents can be used for the positive electrode 6 and the negative electrode 8, respectively, it is possible to improve various performances of the lithium ion secondary battery 1, such as energy density and life improvement.

The solvent preferably used as the second solvent is a solvent having excellent oxidation resistant property, such as γ-butyrolactone and tetrahydrofuran. Thereby, it is possible to suppress reductive decomposition of the second solvent contained in the negative electrode mixture layer 12.

The content of the second solvent contained in the negative electrode mixture layer 12 can be appropriately set within a range in which the second lithium salt can be dissolved, but it may be, for example, 10% by mass or more and 80% by mass or less based on the total amount of the negative electrode mixture layer.

The negative electrode mixture layer 12 may further contain a binder and a conductive material as other components. The types and contents of the binder and the conductive material can be used if they are identical to the types and contents of the binder and the conductive material in the above-mentioned positive electrode mixture layer 10.

The thickness of the negative electrode mixture layer 12 may be 10 μm or more, 15 μm or more, or 20 μm or more, and 100 μm or less, 80 μm or less, 70 μm or less, 50 μm or less, 40 μm or less, or 30 μm or less.

The separation membrane 7 is a separation membrane for being disposed between the positive electrode mixture layer 10 and the negative electrode mixture layer 12 in the lithium ion secondary battery 1. This separation membrane has a role of separating the first solvent and the second solvent contained in the positive electrode mixture layer 10 and the negative electrode mixture layer 12 from each other and thus preventing them from being mixed with each other. The separation membrane 7 allows exchange of lithium ions.

The separation membrane 7 contains a polymer having lithium ion conductivity, a lithium salt (third lithium salt), and a solvent (third solvent).

The polymer having lithium ion conductivity means a polymer having the property of being able to conduct lithium ions derived from the lithium salt in the presence of the lithium salt. Whether or not a polymer can conduct lithium

ions can be confirmed by measuring the ionic conductivity of the polymer. If the peak of ion conductivity measured when 1 to 40% by mass of lithium salt is added to the polymer is $1\times10^{-6}$ S/cm or more, the polymer can be said to have lithium ion conductivity.

The polymer is a copolymer comprising, as monomer units thereof, a first monomer that has two (meth)acryloyl groups and a second monomer that has three or more (meth)acryloyl groups.

Since the polymer containing combination of the first monomer and the second monomer has an appropriate crosslink density, it is considered that a separation membrane having a low resistance value while being a thin film can be formed, but the mechanism is not limited thereto.

The first monomer is a compound having two (meth)acryloyl groups and a linking group that links the two (meth)acryloyl groups. The linking group may include a hydrocarbon group and/or a heteroatom-containing group. The linking group is a hetero atom-containing group, which may include an oxygen atom-containing group, and for example, it may include an ether group (-O-). The linking group may be a divalent group consisting of a hydrocarbon group (e.g., an alkylene group) and a heteroatom-containing group (e.g., an ether group), and for example, it may be a polyoxyalkylene group or an oxyalkylene group.

The first monomer may be a monomer represented by the following formula (1-1).

[Chemical Formula 1]

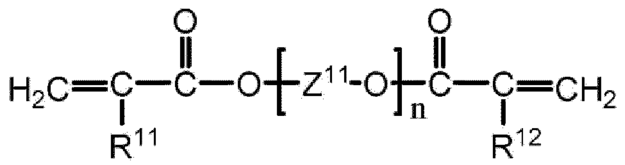

(1-1)

wherein, in formula (1-1), $R^{11}$ and $R^{12}$ each independently represent a hydrogen atom or a methyl group ($-CH_3$).

n represents an integer of 1 or more. n may be, for example, 5 or more, 10 or more, 15 or more, or 20 or more, and 40 or less, 35 or less, 30 or less, or 25 or less.

$Z^{11}$ represents an alkylene group. $Z^{11}$ may be, for example, an alkylene group having 1 to 6 carbon atoms or 1 to 3 carbon atoms. $Z^{11}$ may be, for example, $-CH_2-CH_2-$ or $-CH(CH_3)-CH_2-$.

The ionic conductivity of the first monomer at 25°C may be, for example, 0.01 mS/cm or more, 0.05 mS/cm or more, or 0.10 mS/cm or more, and 1.0 mS/cm or less, 0.50 mS/cm or less, or 0.30 mS/cm or less.

The ionic conductivity of the first monomer at 25°C can be measured by the method shown below.

<Preparation of Separation Membrane for Measuring Ionic Conductivity>

A first monomer, a lithium salt, a solvent and a photopolymerization initiator are mixed to prepare a slurry. A silicon rubber frame (4×4 cm, thickness: 1 mm) is mounted on a PET sheet (8×8 cm, thickness: 0.035), and the prepared slurry is placed in the frame. Then, ultraviolet light (wavelength: 365 nm) is irradiated to polymerize the first monomer, thereby obtaining a separation membrane. The separation membrane is removed from the frame and provided for the test described below. Here, the lithium salt may be $LiN(SO_2CF_3)_2$ (LiTFSI, lithium bistrifluoromethanesulfonylimide). The solvent may be 1-ethyl-3-methylimidazolium-bis(trifluoromethanesulfonyl)imide (EMI-TFSI). The photopolymerization initiator may be 2-hydroxy-2-methyl-1-phenylpropanone. The irradiation time of ultraviolet light (wavelength: 365 nm) may be 15 minutes.

<Measurement of Ionic Conductivity>

A test cell is prepared using the separation membrane, thereby evaluating the ionic conductivity of the separation membrane. An upper cover (CR2032 cap available from Hohsen Corp.), a 1.6mm thick plate spring, a 1.0 mm thick SUS spacer (2 sheets), a separation membrane, gasket, a lower cover (CR2032 case available from Hohsen Corp.) are laminated in the stated order, and the upper cover and the lower cover are caulked to fabricate a test cell. The measurement device and measurement conditions are as follows.

Measurement device: VSP electrochemical measurement system (available from BioLogic)
Measurement temperature: 25°C
AC amplitude: 10mV

Frequency range: 10mHz to 1MHz

After the measurement, the ionic conductivity of the separation membrane was calculated according to the following formula (α).

$$\sigma = L/RA \ (\alpha)$$

σ (S/cm): ionic conductivity
L (cm): thickness of separation membrane
R (Ω): bulk resistance
A ($cm^2$): cross-sectional area of SUS spacer

As the first monomer, a polyethylene glycol #1000 diacrylate (e.g., product name: NK Ester A-1000 available from Shin-Nakamura Chemical Co., Ltd.) and a polyethylene glycol #800 diacrylate (e.g., product name: NK Ester A-800 available from Shin-Nakamura Chemical Co., Ltd.) can be mentioned as an example.
A first monomer may be used singly or in combination of two or more types.
The content of the first polymer contained as a monomer unit in the polymer may be 5% by mass or more, 10% by mass or more, or 15% by mass or more, and 70% by mass or less, 60% by mass or less, or 50% by mass or less, based on the total amount of the separation membrane.
A second monomer is a monomer which has 3 or more (meth)acryloyl groups. The number of (meth)acryloyl groups in the second monomer may be, for example, 3 to 6, or may be 3 to 4, or may be 4.
The second monomer may be a compound having three or more (meth)acryloyl groups and a linking group that links these (meth)acryloyl groups. The linking group may include a hydrocarbon group and/or a heteroatom-containing group. The linking group is a heteroatom-containing group, which may include an oxygen atom-containing group, and for example, it may include an ether group (-O-). The linking group may be a divalent group consisting of a hydrocarbon group (e.g., alkylene group) and a heteroatom-containing group (e.g., ether group), and for example, it may be a polyoxyalkylene group or an oxyalkylene group.
The second monomer having three (meth)acryloyl groups may be a monomer represented by the following formula (1-2).

[Chemical Formula 2]

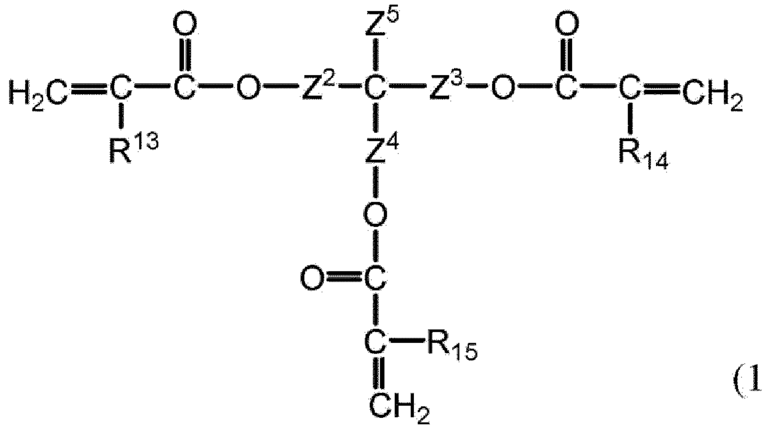

(1-2)

wherein, in formula (1-2) , $R^{13}$, $R^{14}$ and $R^{15}$ each independently represent a hydrogen atom or a methyl group.
$Z^2$, $Z^3$ and $Z^4$ each independently represent an alkylene group. The alkylene group represented by $Z^2$, $Z^3$ and $Z^4$ may be an alkylene group having 1 to 6 or 1 to 3 carbon atoms, or may be a methylene group ($-CH_2-$).
$Z^5$ represents an alkyl group. $Z^5$ may be, for example, an alkyl group having 1 to 10, 1 to 6 or 1 to 3 carbon atoms, or may be an ethyl group ($-CH_2-CH_3$). A monovalent hydrocarbon group represented by X may be, for example, an alkyl group.
Examples of the second monomer having three (meth)acryloyl groups include trimethylolpropane triacrylate (e.g., product name: NK Ester A-TMPT available from Shin-Nakamura Chemical Co., Ltd.).
The second monomer having four (meth)acryloyl groups may be a monomer represented by the following

formula (1-3).

[Chemical Formula 3]

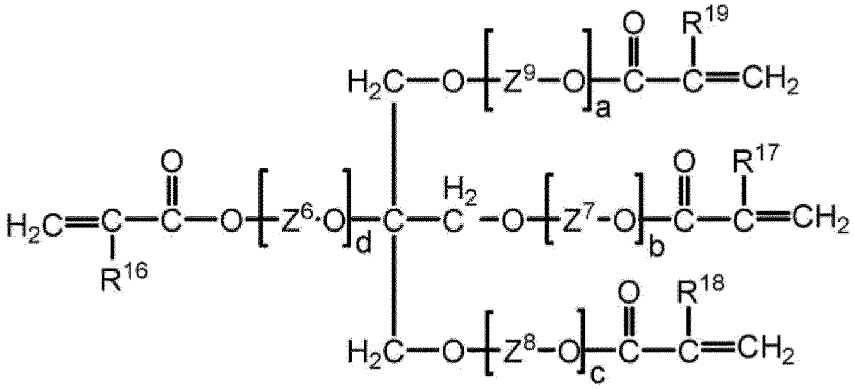

(1-3)

wherein, in formula (1-3), $R^{16}$, $R^{17}$, $R^{18}$ and $R^{19}$ each independently represent a hydrogen atom or a methyl group.

$Z^6$, $Z^7$, $Z^8$ and $Z^9$ each independently represent an alkylene group. The alkylene group represented by $Z^2$, $Z^3$ and $Z^4$ may be an alkylene group having 1 to 6 or 1 to 3 carbon atoms, or may be an ethylene group ($-CH_2-CH_2-$).

a, b, c and d each independently represents an integer of 1 or more. a+b+c+d may be 4 or more, 10 or more, 20 or more, or 30 or more, and may be 50 or less or 40 or less.

Examples of the second monomer having three (meth)acryloyl groups include ethoxylated pentaerythritol tetraacrylate (e.g., product name: NK Ester A-TM35E available from Shin-Nakamura Chemical Co., Ltd.).

The ionic conductivity of the second monomer at 25°C may be, for example, 0.001 mS/cm or more, or 0.01 mS/cm or more, and may be 0.5 mS/cm or less, or 0.05 mS/cm or less. The ionic conductivity of the second monomer at 25°C can be measured using the second monomer by the same method as the method for measuring the ionic conductivity of the first monomer at 25°C. In the measurement of the ionic conductivity of the second monomer at 25°C, the irradiation time of ultraviolet light (wavelength: 365 nm) may be 2 minutes.

A second monomer may be used singly or in combination of two or more types.

The content of the second polymer contained as a monomer unit in the polymer may be 5% by mass or more, 10% by mass or more, or 15% by mass or more, and 70% by mass or less, 60% by mass or less, or 50% by mass or less, based on the total amount of the separation membrane.

The ratio (C2/C1) of the mass (C2) of the second monomer to the mass (C1) of the first monomer, which is included as a monomer unit in the polymer, is 5 or less, 4 or less, 3 or less, or 2 or less, 1 or less, or 1/2 or less, from the viewpoint of further lowering the resistance value of the separation membrane. The ratio (C2/C1) of the mass (C2) of the second monomer to the mass (C1) of the first monomer, which is included as a monomer unit in the polymer, is 1/5 or more, 1/4 or more, 1/3 or more, 1/2 or more, 1 or more, or 2 or more, from the viewpoint of being more excellent in the separation capability of the separation membrane.

The content of the polymer may be 60% by mass or more, 70% by mass or more, or 80% by mass or more, and 90% by mass or less, 80% by mass or less, or 70% by mass or less, based on the total weight of the separation membrane.

The type of the third lithium salt may be identical to that of the first lithium salt contained in the above-mentioned positive electrode mixture layer 10. The tertiary lithium salt may be of the same as the first lithium salt and/or the second lithium salt, or may be different from the first lithium salt and/or the second lithium salt.

The content of the third lithium salt is preferably 5% by mass or more, more preferably 13% by mass or more, and still more preferably 15% by mass or more, based on the total amount of the third lithium salt and the third solvent, from the viewpoint of being excellent in the ionic conductivity of the separation membrane. The content of the third lithium salt is preferably 35% by mass or less, more preferably 23% by mass or less, and still more preferably 20% by mass or less, based on the total amount of the third lithium salt and the third solvent, from the viewpoint of the viscosity of the solvent.

The content of the third lithium salt is preferably 2% by mass or more, more preferably 3% by mass or more, and still more preferably 5% by mass or more based on the total weight of the separation membrane, from the viewpoint of further increasing the ion conductivity of the separation membrane 7.

The content of the third lithium salt is preferably 12% by mass or less, more preferably 9% by mass or less, and still more preferably 6% by mass or less based on the total weight of the separation membrane, from the viewpoint of further increasing the ionic conductivity of the separation membrane 7.

The third solvent is a solvent for dissolving the third lithium salt. From the viewpoint of suppressing volatilization

from the separation membrane, the third solvent is preferably an ionic liquid or glyme represented by the following formula (2), more preferably an ionic liquid.

$$R^{21}O\text{-}(CH_2CH_2O)_k\text{-}R^{22} \qquad (2)$$

[wherein, in formula (2), $R^{21}$ and $R^{22}$ each independently represent an alkyl group having 1 to 4 carbon atoms, and k represents an integer of 3 to 6]

The ionic liquid contains the following anion component and cation component. And, the ionic liquid used herein is a liquid substance at -20°C or higher.

The anion component of the ionic liquid is not particularly limited, but includes a halogen anion such as $Cl^-$, $Br^-$ or $I^-$, an inorganic anion such as $BF_4^-$ or $N(SO_2F)_2^-$([FSI]$^-$), an organic anion such as $B(C_6H_5)_4^-$, $CH_3SO_2O^-$, $CF_3SO_2O^-$, $N(SO_2C_4F_9)_2^-$, $N(SO_2CF_3)_2^-$([TFSI]$^-$), or $N(SO_2C_2F_5)_2^-$, and the like. The anion component of the ionic liquid preferably contains at least one anion component represented by the following formula 3.

$$N(SO_2C_mF_{2m+1})(SO_2C_nF_{2n+1})^- \qquad (3)$$

[wherein, in formula (3), m and n each independently represent an integer of 0 to 5. m and n may be the same as or different from each other, and are preferably the same as each other.]

The anion component represented by formula (3) is, for example, $N(SO_2C_4F_9)_2^-$, $N(SO_2F)_2^-$([FSI]$^-$), $N(SO_2CF_3)_2^-$([TFSI]$^-$) and $N(SO_2C_2F_5)_2^-$. From the viewpoint of improving the ion conductivity in the lithium ion secondary battery 1, the anion component of the ionic liquid more preferably contains at least one selected from the group consisting of $N(SO_2C_4F_9)_2^-$, $CF_3SO_2O^-$, [FSI]$^-$, [TFSI]$^-$ and $N(SO_2C_2F_5)_2^-$, and more preferably [FSI]-.

The cationic component of the ionic liquid is not particularly limited, but is preferably at least one selected from the group consisting of chain quaternary onium cations, piperidinium cations, pyrrolidinium cations, pyridinium cations and imidazolium cations.

The chain quaternary onium cation is, for example, a compound represented by the following formula (4).

[Chemical Formula 4]

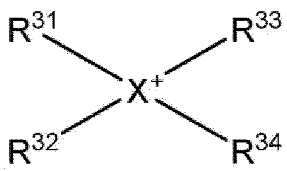

(4)

[wherein, in formula (4), $R^{31}$ to $R^{34}$ each independently represent a chain alkyl group having 1 to 20 carbon atoms or a chain alkoxy alkyl group represented by $R\text{-}O\text{-}(CH_2)_n\text{-}$ (where R represents a methyl group or an ethyl group, and n represents an integer of 1 to 4), and X represents a nitrogen atom or a phosphorus atom. The number of carbon atoms in the alkyl group represented by $R^{31}$ to $R^{34}$ is preferably 1 to 20, more preferably 1 to 10, still more preferably 1 to 5]

The piperidinium cation is a nitrogen-containing six-membered cyclic compound represented by, for example, the following formula (5).

[Chemical Formula 5]

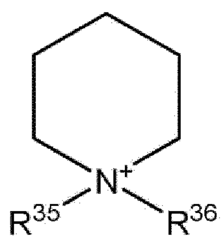

(5)

[wherein, in formula (5), $R^{35}$ and $R^{36}$ each independently represent an alkyl group having 1 to 20 carbon atoms or an alkoxyalkyl group represented by $R\text{-}O\text{-}(CH_2)_n\text{-}$ (where R represents a methyl group or an ethyl group, and n represents an integer of 1 to 4). The number of carbon atoms in the alkyl group represented by $R^{35}$ and $R^{36}$ is preferably 1 to 20, more preferably 1 to 10, still more preferably 1 to 5]

The pyrrolidinium cation is, for example, a 5-membered cyclic compound represented by the following formula (6).

[Chemical Formula 6]

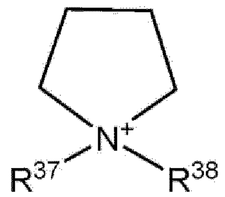

(6)

[wherein, in formula (6), $R^{37}$ and $R^{38}$ each independently represent an alkyl group having 1 to 20 carbon atoms or an alkoxyalkyl group represented by $R-O-(CH_2)_n-$ (where R represents a methyl group or an ethyl group, and n represents an integer of 1 to 4). The number of carbon atoms in the alkyl group represented by $R^{37}$ and $R^{38}$ is preferably 1 to 20, more preferably 1 to 10, still more preferably 1 to 5].

A pyridinium cation is, for example, a compound represented by the following formula (7).

[Chemical Formula 7]

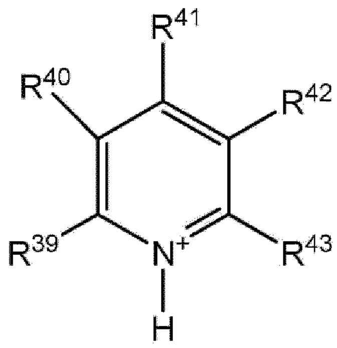

(7)

[wherein, in Formula (7), $R^{39}$ to $R^{43}$ are each independently an alkyl group having 1 to 20 carbon atoms or an alkoxyalkyl group represented by $R-O-(CH_2)_n-$(where R represents a methyl group or an ethyl group, and n represents an integer of 1 to 4), or a hydrogen atom. The number of carbon atoms in the alkyl group represented by $R^{39}$ to $R^{43}$ is preferably 1 to 20, more preferably 1 to 10, still more preferably 1 to 5]

The imidazolium cation is, for example, a compound represented by the following formula (8).

[Chemical Formula 8]

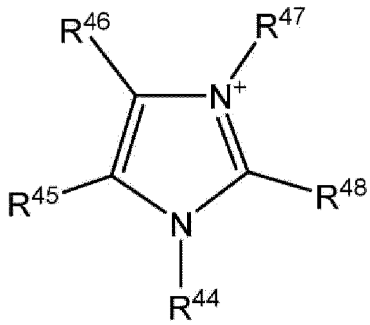

(8)

[wherein, in formula (8), $R^{44}$ to $R^{48}$ each independently represents an alkyl group having 1 to 20 carbon atoms or an alkoxyalkyl group represented by $R-O-(CH_2)_n-$ (where R represents a methyl group or an ethyl group, and n represents an integer of 1 to 4), or a hydrogen atom. The number of carbon atoms in the alkyl group represented by $R^{44}$ to $R^{48}$ is

preferably 1 to 20, more preferably 1 to 10, still more preferably 1 to 5].

The ionic liquid may be, more specifically, N,N-diethyl-N-methyl-N-(2-methoxyethyl)ammonium-bis(trifluoromethanesulfonyl)imide(DEME-TFSI), N,N-diethyl-N-methyl-N-(2-methoxyethyl)ammonium-bis(fluorosulfonyl)imide(DEME-FSI), 1-ethyl-3-methylimidazolium-bis(trifluoromethanesulfonyl)imide(EMI-TFSI), 1-ethyl-3-methylimidazolium-bis(fluorosulfonyl)imide(EMI-FSI), N-methyl-N-propylpyrrolidinium-bis(trifluoromethanesulfonyl)imide(Py13-TFSI), N-methyl-N-propylpyrrolidinium-bis(fluorosulfonyl)imide(Py13-FSI), N-ethyl-N-methylpyrrolidinium-bis(trifluoromethanesulfonyl)imide(Py12-TFSI), N-ethyl-N-methylpyrrolidinium-bis(fluorosulfonyl)imide(Py12-FSI), 1-ethyl-3-methylimidazolium dicyanamide(EMI-DCA), and the like.

In the glyme represented by the above-mentioned formula (2), $R^{21}$ and $R^{22}$ in formula (2) each independently represent an alkyl group having 4 or less carbon atoms or a fluoroalkyl group having 4 or less carbon atoms, and k represents an integer of 1 to 6. $R^{21}$ and $R^{22}$ are each independently preferably a methyl group or an ethyl group.

Glyme may be specifically monoglyme (k=1), diglyme (k=2), triglyme (k=3), tetraglyme (k=4), pentaglyme (k=5), hexaglyme (k=6).

When the separation membrane 7 contains glyme as a solvent, a part or all of the glyme may form a complex with a lithium salt (third lithium salt).

The content of the third solvent may be 40% by mass or less, 38% by mass or less, 35% by mass or less, 33% by mass or less, 30% by mass or less, 25% by mass or less, 20% by mass or less, 18% by mass or less, 15% by mass or less, 13% by mass or less, or 10% by mass or less based on the total amount of the separation membrane, from the viewpoint of obtaining the separation membrane 7 having excellent separation capability of the solvents (first solvent and second solvent). The content of the third solvent may be 5% by mass or more, 8% by mass or more, 18% by mass or more, or 27% by mass or more based on the total amount of the separation membrane from the viewpoint of further increasing the ionic conductivity of the separation membrane 7.

The content of the third solvent can be measured by the method shown below. First, the separation membrane is diluted about 10 times with methanol, and then extracted for 15 minutes by ultrasonic irradiation to obtain an extract. 1.0 μL of this extract is injected into a gas chromatograph to perform gas chromatography mass spectrometry. Specific conditions for gas chromatography mass spectrometry are as follows.

Device name: GC-4000 (available from GL Science)
Carrier gas: Helium 5.0 mL/min
Column: TC-WAX polyethylene glycol (0.53 mm I.D. x 30 m, 1.0 μL)
Split ratio: 1/10
Injection temperature: 250°C
Detection temperature: 250°C
Oven temperature: heated from 60°C (1 minute) at 20°C/min →240°C
Detector: Hydrogen spark ionization detector (FID)
Range: $10^2$

The separation membrane 7 may further contain, for example, inorganic fillers as other components, or may not contain the inorganic filles from the viewpoint of further improving the ionic conductivity of the separation membrane.

The thickness of the separation membrane 7 is 85 μm or more, or 90 μm or less, and may be 400 μm or less, 300 μm or less, 200 μm or less, or 100 ,um or less.

The resistance value of the separation membrane may be, for example, less than 180 Ω, less than 160 Ω, less than 140 Ω, less than 120 Ω, or less than 100 Ω. The resistance value of the separation membrane may be, for example, 30 Ω or more or 50 Ω or more. The resistance value of the separation membrane is measured by the method shown below. First, an upper cover (CR2032 cap available from Hohsen Corp.), a 1.6mm thick plate spring, a 1.0mm thick SUS spacer (2 sheets), a separation membrane, a gasket, a lower cover (CR2032 case available from Hohsen Corp.) were laminated in the stated order, the upper cover and the lower cover were caulked to fabricate a test cell, and the bulk resistance of the separation membrane was measured. The measurement device and measurement conditions were as follows.

Measurement device: VSP electrochemical measurement system (available from BioLogic)
Measurement temperature: 25°C
AC amplitude: 10mV
Frequency range: 10mHz to 1MHz

The ionic conductivity of the separation membrane may be, for example, 0.04 mS/cm or more, or 0.05 mS/cm or more, and may be, for example, 0.15 mS/cm or less.

The ionic conductivity of the separation membrane is measured by the following Equation ( α ).

$$\sigma = L/RA \ldots (\alpha)$$

σ (S/cm): ionic conductivity
L (cm): thickness of the separation membrane
R(Ω): bulk resistance
A ($cm^2$): cross-sectional area of SUS spacer

Subsequently, the manufacturing method of the lithium ion secondary battery 1 is described. A method for manufacturing a lithium ion secondary battery 1 according to one embodiment comprises a step of obtaining a positive electrode 6 comprising a positive electrode mixture layer 10 that contains a positive electrode active material, a first lithium salt, and a first solvent, a step of obtaining a negative electrode 8 comprising a negative electrode mixture layer 12 that contains a negative electrode active material, a second lithium salt, and a second solvent different from the first solvent, a step of forming a slurry containing a first monomer having two (meth)acryloyl groups, a second monomer having three or more (meth)acryloyl groups, a third lithium salt and a third solvent into a membrane, and then reacting the first monomer and the second monomer to obtain a separation membrane 7, and a step of providing the separation membrane 7 between the positive electrode 6 and the negative electrode 8. The order of each step is arbitrary.

In the manufacturing method, specific aspects of the positive electrode active material, the first lithium salt, the first solvent, the negative electrode active material, the second lithium salt, the second solvent, the third lithium salt, and the third solvent are as described above.

In the step of obtaining the positive electrode and the step of obtaining the negative electrode, the positive electrode 6 and the negative electrode 8 can be obtained using a known method. For example, the material used for the positive electrode mixture layer 10 or the negative electrode mixture layer 12 is dispersed in an appropriate amount of dispersion medium using a kneader, a disperser, or the like to obtain a slurry-like positive electrode mixture or negative electrode mixture. Then, the positive electrode mixture or the negative electrode mixture is applied onto the positive electrode current collector 9 or the negative electrode current collector 11 by a doctor blade method, a dipping method, a spray method, or the like, and the dispersion medium is volatilized, thereby obtaining a positive electrode 6 and a negative electrode 8. At this time, the dispersion medium may be water, N-methyl-2-pyrrolidone (NMP), or the like.

In the step of obtaining the separation membrane, a slurry containing a first monomer, a second monomer, a third lithium salt and a third solvent is prepared in one embodiment. Specific embodiments of the first monomer and the second monomer as described above.

The total content of the first monomer in the slurry may be 5% by mass or more, 10% by mass or more, or 15% by mass or more, and 70% by mass or less, 60% by mass or less, or 50% by mass or less based on the total amount of the slurry.

The total content of the second monomer in the slurry may be 5% by mass or more, 10% by mass or more, or 15% by mass or more, and 70% by mass or less, 60% by mass or less, or 50% by mass or less based on the total amount of the slurry.

The mass of the second monomer to the mass of the first monomer in the slurry may be the same as the amount stated as the ratio of the mass of the second monomer to the mass of the first monomer contained as a monomer unit in the polymer.

The content of the third solvent in the slurry may be 40% by mass or less, 38% by mass or less, 35% by mass or less, 33% by mass or less, 30% by mass or less, 25% by mass or less, 20% by mass or less, 18% by mass or less, 15% by mass or less, 13% by mass or less, or 10% by mass or less, based on the total amount of the slurry. The content of the third solvent may be 5% by mass or more, 8% by mass or more, 18% by mass or more, or 27% by mass or more based on the total amount of the slurry, from the viewpoint of further enhancing the ionic conductivity of the separation membrane 7.

A polymerization initiator may be added to the slurry. Thereby, the first monomer and the second monomer can be suitably polymerized, and the separation membrane can be suitably produced from the slurry. The polymerization initiator may be a thermal polymerization initiator or a photopolymerization initiator, and can be appropriately selected depending on the purpose.

Examples of the thermal polymerization initiator include azobisisobutyronitrile and azobis(2-methylbutyronitrile).

Examples of the photopolymerization initiator include 2-hydroxy-2-methyl-1-phenylpropanone, diphenyl (2,4,6-trimethylbenzoyl) phosphine oxide and the like.

The content of the polymerization initiator may be 0.5% by mass or more, 1% by mass or more, 10% by mass or more, or 20% by mass or more, and 50% by mass or less, 40% by mass or less, 30% by mass or less, 10% by mass or less, 5% by mass or less, or 3% by mass or less, based on the total amount of the slurry.

The slurry may further contain an inorganic filler as another component, or may not contain an inorganic filler.

In the step of obtaining the separation membrane, subsequently, the above-mentioned slurry is formed into a

membrane, and then the first monomer and the second monomer are polymerized.

A method for forming the slurry into a membrane is, for example, a method in which a frame of an arbitrary size is provided on one surface of a substrate such as a PET sheet, and the slurry is injected therein. Alternatively, the slurry may be formed in a film state by applying the slurry onto one surface of the substrate by a doctor blade method, a dipping method, a spray method, or the like.

A method of polymerizing the polymerizable component is a method of applying heat under predetermined conditions when the slurry contains a thermal polymerization initiator. The heating temperature may be, for example, 80~90°C. The heating time may be appropriately adjusted in accordance with the heating temperature, and is, for example, 1 to 10 minutes.

A method for polymerizing the first monomer and the second monomer is a method of irradiating light under predetermined conditions when the slurry contains a photopolymerization initiator. In one embodiment, the polymerizable compound may be polymerized by irradiation with light (ultraviolet light) having a wavelength within the range of 200-400 nm.

In the step of providing the separation membrane 7 between the positive electrode 6 and the negative electrode 8, the positive electrode 6, the separation membrane 7 and the negative electrode 8 are laminated, for example, by lamination. Thereby, the electrode group 2 including the positive electrode 6, the negative electrode 8, and the separation membrane 7 provided between the positive electrode 6 and the negative electrode 8 can be obtained. Further, the lithium ion secondary battery 1 can be obtained by housing the electrode group 2 in the battery outer packaging body 3.

## EXAMPLE

Hereinafter, the present invention will be described in more detail with reference to examples, but the present invention is not limited to these examples.

[Example 1]

Monomer represented by the following formula (A) (where n = 23, product name: NK Ester A-1000 available from Shin-Nakamura Chemical Co., Ltd.), Monomer represented by the following formula (B) (where a+b+c+d=35, product name: NK Ester ATM-35E available from Shin-Nakamura Chemical Co., Ltd.), a lithium salt (LiTFSI), a solvent (EMI-TFSI), and a photopolymerization initiator (2-hydroxy-2-methyl-1-phenylpropanone) were mixed to prepare a slurry. The composition of each material was shown in Table 1 below. A silicone rubber frame (4 cm × 4 cm, thickness: 1 mm) was mounted on a PET sheet (8 cm × 8 cm, thickness: 0.035 mm), and the prepared slurry was placed in the frame. Then, ultraviolet light (wavelength: 365 nm) was irradiated for 5 minutes to polymerize the monomer, thereby obtaining a separation membrane. The separation membrane was removed from the frame and provided for the test described below.

[Chemical Formula 9]

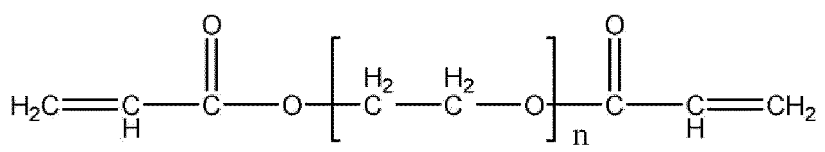

(A)

[Chemical Formula 10]

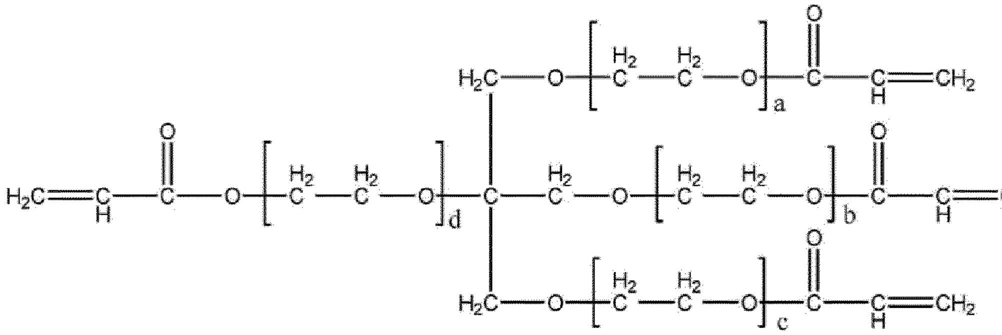

(B)

[Example 2]

A separation membrane was manufactured in the same manner as in Example 1, except that the composition of the slurry was changed as shown in Table 1 below, and the irradiation time of ultraviolet light (wavelength: 365 nm) was changed to 4 minutes.

[Example 3]

A separation membrane was manufactured in the same manner as in Example 1, except that the composition of the slurry were changed as shown in Table 1 below, and the irradiation time of ultraviolet light (wavelength: 365 nm) was changed to 3.5 minutes.

[Comparative Example 1]

A separation membrane was manufactured in the same manner as in Example 1, except that the composition of the slurry were changed as shown in Table 1 below, and the irradiation time of ultraviolet light (wavelength: 365 nm) was changed to 15 minutes.

[Comparative Example 2]

A separation membrane was manufactured in the same manner as in Example 1, except that the composition of the slurry were changed as shown in Table 1 below, and the irradiation time of ultraviolet light (wavelength: 365 nm) was changed to 2 minutes.

<Measurement of Film Thickness>

The film thickness of the separation membrane was measured by the method shown below.
Using a micrometer (PMU150-25MX available from Mitutoyo Co., Ltd.), the film thickness was measured at three arbitrary locations, and the average value thereof was taken as the film thickness of the separation membrane.

<Measurement of Resistance Value (bulk resistance)>

Test cells were fabricated using the separation membranes of Examples and Comparative Examples, thereby evaluating the resistance value of the separation membranes. First, an upper cover (CR2032 cap available from Hohsen Corp.), a 1.6mm thick plate spring, a 1,0mm thick SUS spacer (2 sheets), a separation membrane, a gasket, a lower cover (CR2032 case available from Hohsen Corp.) were laminated in the stated order, the upper cover and the lower cover were caulked to fabricate a test cell, and the resistance value (bulk resistance) of the separation membrane was measured. The measurement device and measurement conditions were as follows.

Measurement device: VSP electrochemical measurement system (available from BioLogic)
Measurement temperature: 25°C
AC amplitude: 10mV
Frequency range: 10mHz to 1MHz

[Table 1]

| Item | | Comparative Example | Example | | | Comparative Example |
|---|---|---|---|---|---|---|
| | | 1 | 1 | 2 | 3 | 2 |
| Addition amount of each material (g) | A-1000 | 4.0 | 3.0 | 2.0 | 1.0 | 0.0 |
| | ATM-35E | 0.0 | 1.0 | 2.0 | 3.0 | 4.0 |
| | EMITFSI | 2.0 | 2.0 | 2.0 | 2.0 | 2.0 |
| | LiTFSI | 0.4 | 0.4 | 0.4 | 0.4 | 0.4 |
| | 2-Hydroxy-2-methyl-1-phenylpropanone | 0.1 | 0.1 | 0.1 | 0.1 | 0.1 |
| Fabricable film thickness (um) | | 418 | 96 | 90 | 95 | 87 |
| Resistance value at each film thickness (Ω) | 180 | 62 | 74 | 95 | 172 | |

As shown in Table 1, the separation membranes according to Examples could be made thinner and had low resistance values.

In the slurry composition shown in Comparative Example 1, if the film thickness was reduced to about 90 μm, the separation membrane was torn when peeling off from the PET sheet, and the separation membrane could not be formed.

<Evaluation of Solvent Separation Capability>

The solvent separation capability of the separation membranes according to Examples 1 to 3 was evaluated by the method shown below. A separation membrane according to Example 3, and a separator (UP3085 available from Ube Industries Ltd.) were overlapped, and sandwiched between two silicone rubber sheets (thickness: 0.5 mm), which were placed between H-type cells. Dimethyl carbonate (DMC) was put into the cell on the separation membrane side, and the appearance of the separation membrane was visually observed after a predetermined number of days had passed. If the separator membrane is excellent in solvent separation capability, DMC hardly penetrates the separation membrane, which makes it difficult for DMC to penetrate the separation membrane. However, if the separation membrane is inferior in solvent separation capability, DMC permeates the separation membrane and permeates into the separator. Therefore, by observing the appearance of the separator and confirming whether or not DMC has permeated the separator, it is possible to evaluate the separation capability of the solvent (solvents corresponding to the first solvent and the second solvent) of the separation membrane.

The separation membrane according to Example 3 had excellent solvent separation ability compared to the separation membranes according to Examples 1 and 2. The separation membrane according to Example 3 did not permeate DMC into the separator even after 7 days from the start of the test.

[Description of Reference Numerals]

| | | | |
|---|---|---|---|
| 1: | lithium ion secondary battery | 2: | electrode group |
| 3: | battery outer packaging body | 4: | positive electrode current collector tab |
| 5: | negative current collector tab | 6: | positive electrode |
| 7: | separation membrane | 8: | negative electrode |
| 9: | positive current collector | 10: | positive electrode mixture layer |
| 11: | negative current collector | 12: | negative electrode mixture layer |

## Claims

**1.** A lithium ion secondary battery comprising a positive electrode mixture layer, a separation membrane, and a negative electrode mixture layer in the stated order, wherein:

the positive electrode mixture layer contains a positive electrode active material, a first lithium salt, and a first solvent,
the negative electrode mixture layer contains a negative electrode active material, a second lithium salt, and a second solvent different from the first solvent,
the separation membrane contains a polymer having lithium ion conductivity, a third lithium salt, and a third solvent, and
the polymer is a copolymer comprising, as monomer units thereof, a first monomer that has two (meth)acryloyl groups and a second monomer that has three or more (meth)acryloyl groups.

**2.** The lithium ion secondary battery according to claim 1, wherein:
the second monomer is a monomer having four (meth)acryloyl groups.

**3.** A separation membrane for being disposed between a positive electrode mixture layer and a negative electrode mixture layer, in a lithium ion secondary battery comprising a positive electrode mixture layer that contains a positive electrode active material, a first lithium salt and a first solvent, and a negative electrode mixture layer that contains a negative electrode active material, a second lithium salt and a second solvent different from the first solvent,

wherein the separation membrane contains a polymer having lithium ion conductivity, a third lithium salt, and a third solvent, and
wherein the polymer is a copolymer comprising, as monomer units thereof, a first monomer that has two (meth)acryloyl groups and a second monomer that has three or more (meth)acryloyl groups.

**4.** The separation membrane according to claim 3, wherein:
the second monomer is a monomer having four (meth)acryloyl groups.

**5.** A method for manufacturing a lithium ion secondary battery, comprising:

obtaining a positive electrode comprising a positive electrode mixture layer that contains a positive electrode active material, a first lithium salt, and a first solvent;
obtaining a negative electrode comprising a negative electrode mixture layer that contains a negative electrode active material, a second lithium salt, and a second solvent different from the first solvent;
forming a slurry containing a first monomer having two (meth)acryloyl groups, a second monomer having three or more (meth)acryloyl groups, a third lithium salt and a third solvent into a membrane, and then reacting the first monomer and the second monomer to obtain a separation membrane; and
providing the separation membrane between the positive electrode and the negative electrode.

**6.** The method according to claim 5, wherein:
the second monomer is a monomer having four (meth)acryloyl groups.

**7.** A method for manufacturing a separation membrane for being disposed between a positive electrode mixture layer and a negative electrode mixture layer, in a lithium ion secondary battery comprising a positive electrode mixture layer that contains a positive electrode active material, a first lithium salt and a first solvent, and a negative electrode mixture layer that contains a negative electrode active material, a second lithium salt and a second solvent different from the first solvent,
wherein the method comprises forming a slurry containing a first monomer having two (meth)acryloyl groups, a second monomer having three or more (meth)acryloyl groups, a third lithium salt and a third solvent into a membrane, and then reacting the first monomer and the second monomer to obtain a separation membrane.

**8.** The method according to claim 7, wherein:
the second monomer is a monomer having four (meth)acryloyl groups.

【FIG. 1】

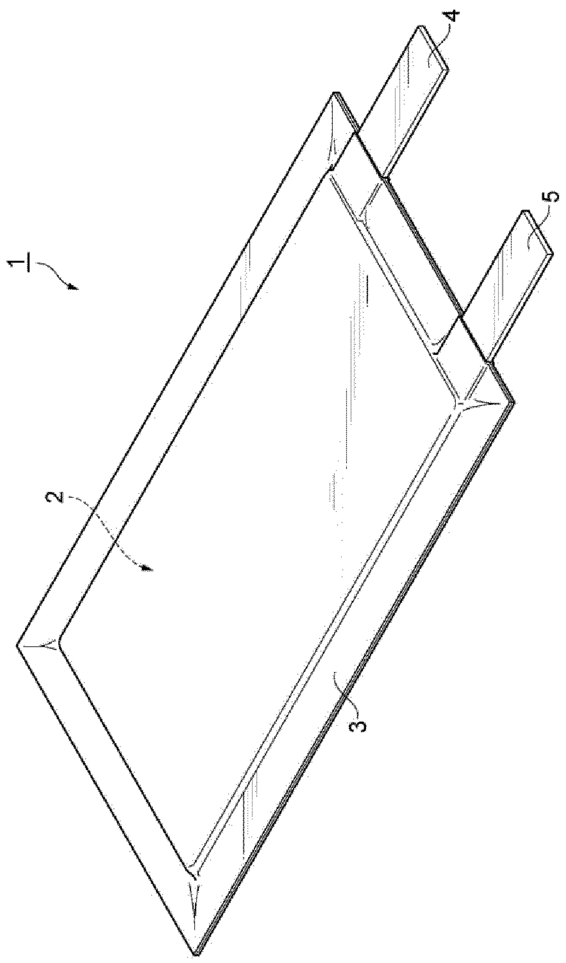

【FIG. 2】

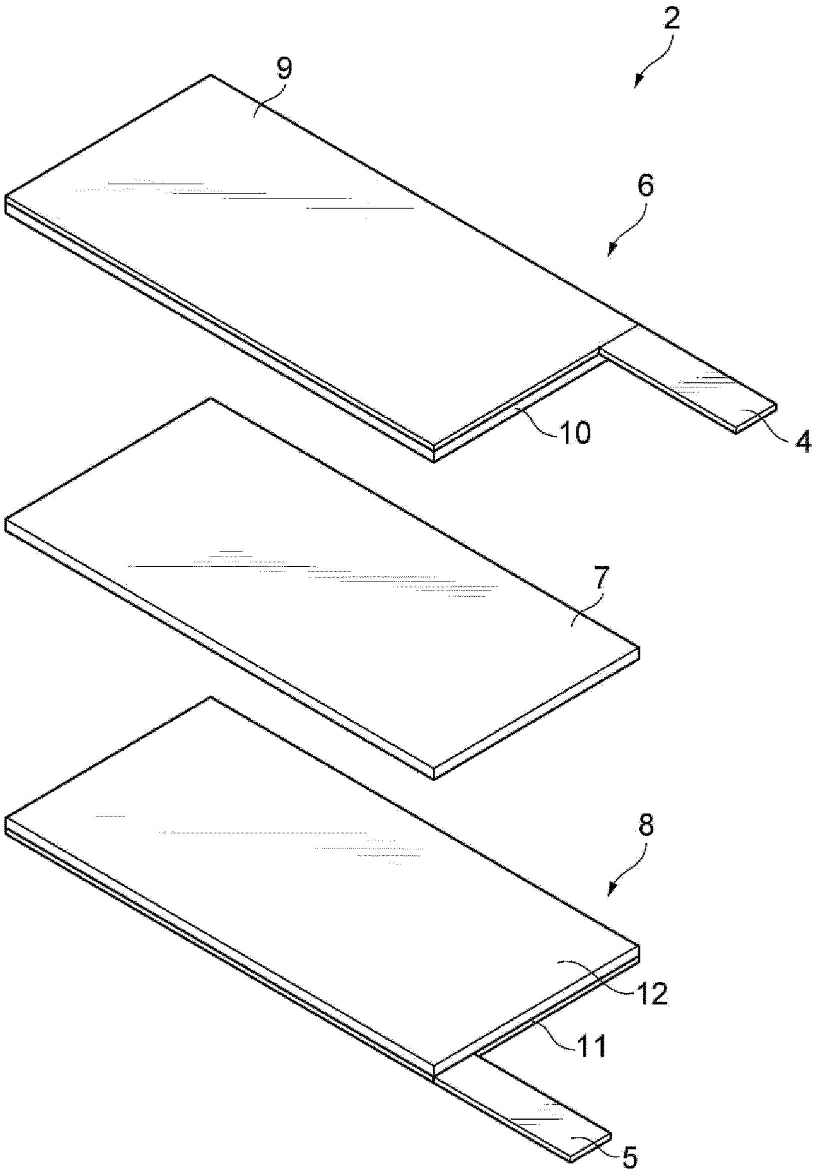

**INTERNATIONAL SEARCH REPORT**

International application No.
PCT/JP2021/012675

A. CLASSIFICATION OF SUBJECT MATTER
H01M 10/0565(2010.01)i
FI: H01M10/0565

According to International Patent Classification (IPC) or to both national classification and IPC

B. FIELDS SEARCHED

Minimum documentation searched (classification system followed by classification symbols)
H01M10/0565

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2020/250892 A1 (SHOWA DENKO MAT CO LTD) 17 December 2020 (2020-12-17) paragraphs [0021]-[0075], example 1, fig. 1-2 | 1-8 |
| A | JP 2001-110447 A (SHARP CORP) 20 April 2001 (2001-04-20) claims 1-6, paragraphs [0010]-[0028], examples 1-6, fig. 1-2 | 1-8 |
| A | JP 2011-192611 A (SEKISUI CHEMICAL CO LTD) 29 September 2011 (2011-09-29) paragraphs [0001]-[0006], [0011]-[0057], examples | 1-8 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 April 2021 (30.04.2021) | 18 May 2021 (18.05.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/012675

| Patent Documents referred in the Report | Publication Date | Patent Family | Publication Date |
|---|---|---|---|
| WO 2020/250892 A1 | 17 Dec. 2020 | (Family: none) | |
| JP 2001-110447 A | 20 Apr. 2001 | US 6534214 B1 claims 1-16, specification, column 3, line 11 to column 7, line 26, examples 1-6, fig. 1-2 | |
| JP 2011-192611 A | 29 Sep. 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001110447 A